# EUROPEAN PATENT SPECIFICATION

(11) **EP 3 749 152 B1**
(45) Date of publication and mention of the grant of the patent: **25.01.2023**
(21) Application number: 19821696.2
(22) Date of filing: 06.02.2019
(51) Int. Cl.: A47J 31/18, A47J 31/52

(54) **A HOT BEVERAGE PREPARING MACHINE HAVING AN ADAPTIVE USER INTERFACE**
HEISSGETRÄNKEBEREITUNGSMASCHINE MIT ADAPTIVER BENUTZERSCHNITTSTELLE
MACHINE DE PRÉPARATION DE BOISSONS CHAUDES AYANT UNE INTERFACE UTILISATEUR ADAPTATIVE

(30) Priority: 08.02.2018 TR 201801798
(43) Date of publication of application: 16.12.2020
(73) Proprietor: Arzum Elektrikli Ev Aletleri San. Ve Tic. A.S., 34050 Istanbul (TR)
(72) Inventor: ATILLA, Ersoy, 34050 Eyüp/Istanbul (TR); YILDIZ, Mehtap, 34050 Eyüp/Istanbul (TR)
(86) International application number: PCT/TR2019/050071
(87) International publication number: WO 2019/245495

(56) References cited:
- EP-A1- 1 992 263
- EP-A1- 1 992 263
- WO-A1-2015/016708
- WO-A1-2015/016708
- WO-A1-2016/025992
- US-A1- 2013 164 422
- US-A1- 2013 164 422

## Description

### Field of the Invention

The present invention relates to a hot beverage brewing machine, especially a Turkish coffee machine, where the user interface can be adapted by being changed.

### Background of the Invention

Hot beverage preparing machines ease the preparation of often consumed beverages such as coffee and tea. These machines might comprise containers in which the materials, such as water, tea, coffee and sugar, that are necessary for preparing the beverage can be put. By this way, the user needs only to push a button for preparing the beverage he wants. Where, in Turkish coffee machines, when the user starts the brewing process after putting the coffee and sugar inside a cooking chamber, the necessary amount of water could be drawn from the water tank, and transferred to the cooking chamber. In the case when the said materials inside the material containers are low, or are finished, it is important to warn the user so that an erroneous brewing process is prevented.

In the United States patent document numbered US8171843 in the background of the invention, a coffee machine wherein the liquid level is automatically measured, is disclosed. Said machine comprises a magnetic switch which moves according to the level of water inside the water tank, and reed switches that could be affected by these magnetic switches. By the virtue of this structure, the wanted amount of coffee could be prepared.

In the international patent application numbered WO2016025992, a coffee maker is disclosed. The said coffee maker comprises at least two water level sensors, one being the lower sensor and the other being the upper sensor. When the water level in the reservoir is inadequate for even a single serve, the processor does not allow the pump or the thermoblock heater to be activated. Document WO-A1-2016/025992 discloses a hot beverage preparing machine according to the preamble of claim 1.

A hot beverage preparing machine, where the selections regarding the beverages that could not be prepared according to the levels of components inside the containers are blocked so that they cannot be selected, is not disclosed in the state of the art.

### Short Description of the Invention

An object of the invention is to provide a hot beverage preparing machine, where the selections regarding the beverages that could not be prepared according to the levels of components inside the containers are prevented from being selected by the user.

Another object of the invention is to provide a hot beverage preparing machine where the remaining materials inside the material containers are evaluated according to the size of the cups to be used.

### Detailed Description of the Invention

The hot beverage preparing machine in order to fulfill the objects of the present invention is illustrated in the attached figures, where:

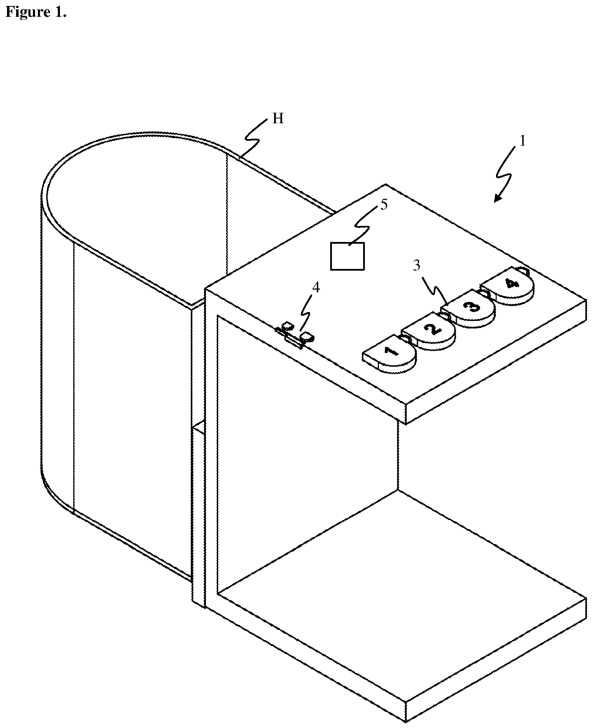

- **Figure 1.**: Schematic view of the hot beverage preparing machine

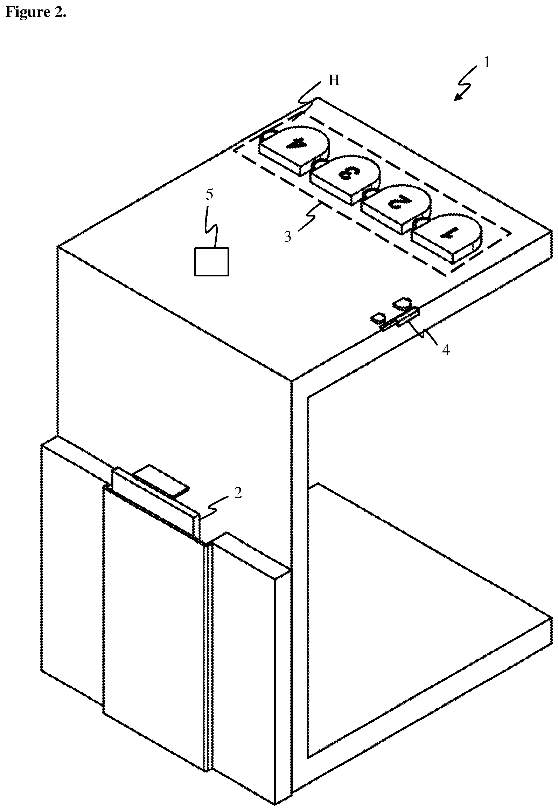

- **Figure 2.**: Another schematic view of the hot beverage preparing machine

Elements shown in the figures are individually numbered, and the correspondence of these numbers are given as follows:
**1.** Hot beverage preparing machine
**2.** Sensor
**3.** Interface
**4.** Cup selector
**5.** Control unit
**H.** Container

The hot beverage preparing machine (1), where the selections regarding the beverages that could not be prepared according to the levels of components inside a container (H) are prevented from being selected by the user, essentially comprises,
- at least one sensor (2) for sensing the level of material inside the container (H),
- at least one interface (3) for the user to select one, multiple or all of the options for at least the type, the preparation type, and the number of the beverage to be prepared,
- at least one control unit (5) adapted to calculate the remaining material inside the container (H) according to the data supplied by the sensor (2), and to prevent the selections regarding the beverages which cannot be prepared according to the calculated material level from being selected on the interface (3)

Said container (H) is suitable for storing materials such as water, coffee, sugar and whitener. The sensor (2) can be one or multiple of sensors in the state of the art, such as a liquid level sensor for measuring the level of water in the container (H), weight sensor for measuring the amount of the materials such as coffee, sugar and whitener, or proximity sensor. The sensor (2) could sense in a continuous or stepped manner. For example, the sensor (2) for sensing the water level could sense the water level in 20 ml intervals.

The inventive hot beverage preparing apparatus (1) comprises at least one interface (3) for the user to select one, multiple or all of the options for at least the type, the preparation type, and the number of the beverage to be prepared. Said interface (3) is adapted to receive input from the user, and to give feedback to the user. Said interface (3) comprises at least one of input means in the state of the art for receiving input from the user, such as push-button, switch, touch-button, or any input means which might be developed in the future, however the input means are not limited by these examples. The interface (3) might utilize any means, visual, audial and/or tactile, for giving feedback. For example, a visual feedback could be given to the user by a displaying means such as a monitor, single or multi-colored led, or a multi-segment display, or an audial feedback could be given to the user by a sound source such as a buzzer or a speaker, however the means for giving feedback is not limited to these examples. Visual feedback could be achieved in ways such as changing the color of the input means (e.g. green/red), turning off the illumination, preventing the option from being displayed on monitor, displaying the option differently from the selectable options. What is important is that the user can distinguish between the selectable options and the non-selectable options.

The control unit (5) receives the data supplied by the sensor (2), and according to these data, calculates the amount of material in the container (H) corresponding to the said sensor (2). When the amount of the material remaining in the container (H) is less than enough for preparing any of the beverages selectable from the options on the interface (3), the control unit (5) prevents the corresponding option on the interface (3) from being selected. The control unit (5) prevents the said option from being selected in any of the ways such as cutting the power supply of the said input means, making the said option non-selectable, removing the said option. Changing the interface (3) according to the amount of the material inside the container (H) means adapting the said interface (3) according to the working conditions.

A Turkish coffee machine might be given as an example to the inventive hot beverage preparing machine (1). In this example, let us assume that the container (H) is suitable for receiving water, and the interface (3) has separate buttons for making 1, 2, 3, or 4 cups of coffee. Let these buttons be back-lit. In this embodiment, let the sensor (2) be a water level sensor suitable for sensing the water level in the container (H) at multiple levels. The control unit (5) calculates how many cups of coffee could be made with the water present inside the container (H). If the amount of water inside the container (H) is enough for at least four cups of coffee, the control unit (5) turns on the back-lights of all the buttons on the interface (3). If the amount of water inside the container (H) is enough for three cups of coffee, the control unit (5) turns off the back-light of the button dedicated for making four cups of coffee. By this way, the user sees the buttons dedicated for making 1, 2 and 3 cups of coffee illuminated, while he sees the button dedicated for making four cups of coffee is not illuminated, thus understands that this option is disabled. In the same manner, as the water level in the container (H) reduces, the control unit (5) turns off the illumination for the other buttons. This embodiment is just an example for the invention to be further understood, and the invention could not be limited with this embodiment.

In an embodiment of the invention, the inventive hot beverage preparing machine (1) comprises at least one cup selector (4) enabling the user to select the size of the cup he wishes to use. Said cup selector (4) has at least two selections, such that a selection between at least two different sizes of cups could be made. The control unit (5) considers the position of the cup selector (4) while calculating the amount of the remaining material inside the container (H). For example, while the remaining water inside the container (H) is enough for 4 small cups, it might not be enough for 4 large cups. For this reason, the sizes of the cups to be used need to be taken into consideration while calculating the selectable options on the interface (3). In this embodiment, the inventive hot beverage preparing apparatus (1) comprises at least one memory unit (not-shown) inside of which, data regarding to the necessary amount of materials for at least one cup size is held.

For a better understanding of the invention, let us adapt the above-mentioned Turkish coffee example to this embodiment. Let the cup selector have two positions, namely large cup and small cup. Let the memory unit have the information that the small cup holds 70 ml, and the large cup holds 80 ml liquid. In this case, when the container (H) has 300 ml of water inside, this amount would be enough for 4 small cups of coffee, while it would be enough for just 3 large cups of coffee. In this case, when the user switches the cup selector (4) to the position for small cups, the control unit (5) turns on the illumination of the buttons assigned for preparing 1, 2, 3 and 4 cups of coffee. In the case when the user switches the cup selector (4) to the position for large cups, the control unit (5) turns off the illumination of the button assigned for preparing 4 cups of coffee. By this way, the user understands that the amount of water remaining in the container (H) is not enough for making four big cups of coffee. As the control unit (5) disables the non-selectable options, the user is prevented from making an erroneous choice.

In an embodiment of the invention, the cup selector (4) is a switch having at least two positions, each of which corresponds to a cup size.

In an embodiment of the invention, the inventive hot beverage preparing machine (1) could prepare different types of beverages. In this embodiment, the memory unit has the data for the amount of materials needed for preparing each beverage, recorded inside. By this way, the control unit (5) determines the beverages that could be prepared and not prepared according to the amount of materials inside the container (H) or containers (H), enables the selections regarding the beverages preparable, on the interface (3), and renders the selections regarding the beverages that are not preparable non-selectable.

In the inventive hot beverage preparing machine (1), the materials needed for a beverage to be prepared could be placed in different containers (H) as well as some of these materials could be placed in a preparation chamber by the user. For example, the user could place the required amount of coffee and sugar inside the said preparation chamber, and the hot beverage preparing machine (1) could draw the required amount of water from the container (H). The preparation chamber might comprise actuators such as heating means, and sensors such as temperature sensors.

## Claims

1. A hot beverage preparing machine (1), where the selections regarding the beverages that could not be prepared according to the levels of components inside a container (H) are prevented from being selected by the user, comprises,
- at least one sensor (2) for sensing the level of material inside the container (H),
- at least one interface (3) for the user to select one, multiple or all of the options for at least the type, the preparation type, and the number of the beverage to be prepared, and at least one control unit **characterized by**
- the at least one control unit (5) being adapted to calculate the remaining material inside the container (H) according to the data supplied by the sensor (2), and to prevent the selections regarding the beverages which cannot be prepared according to the calculated material level from being selected on the interface (3) by cutting the power supply of the said input means, by making the said option non-selectable or by removing the said option.

2. A hot beverage preparing machine (1) according to Claim 1 wherein the interface (3) is adapted to receive input from the user, and to give feedback to the user.

3. A hot beverage preparing apparatus (1) according to Claim 2 **characterized in that** the control unit (5) is adapted to change the interface (3) thereby providing visual feedback to the user

4. A hot beverage preparing machine (1) according to Claim 1 further comprising at least one cup selector (4) having at least two positions for selecting at least two different cup sizes, enabling the user to select the size of the cup he wishes to use; at least one memory unit, inside of which, at least data regarding the necessary amount of materials for each cup size is held and **characterized by** the control unit (5) adapted to calculate the number of cups of beverages that could be made, using the data provided by the sensor (2) and the value in the memory unit corresponding to the selected cup.

## Patentansprüche

1. Eine Heißgetränkezubereitungsmaschine (1), bei der verhindert wird, dass die gemäß den Füllständen der Komponenten in einem Behälter (H) nicht zubereitungsfähigen Getränke vom Benutzer ausgewählt werden, **dadurch gekennzeichnet, dass**
- zum Erfassen des Materialfüllstands im Inneren des Behälters (H) mindestens ein Sensor (2) vorhanden ist,
- zur Auswahl mindestens einer, mehrerer oder aller Optionen für die Art, den Zubereitungstypus und die Anzahl der zuzubereitenden Getränke durch den Benutzer mindestens eine Schnittstelle (3) und mindestens eine Steuereinheit vorhanden ist, die **dadurch gekennzeichnet ist, dass**
- die mindestens eine Steuereinheit (5) dafür angepasst ist, um das verbleibende Material im Behälter (H) gemäß den durch den Sensor (2) zur Verfügung gestellten Daten zu berechnen und für die nach dem berechneten Materialfüllstand nicht zubereitungsfähigen Getränke eine Auswahl an der Schnittstelle (3) zu verhindern, indem die Stromversorgung der entsprechenden Eingabemittel unterbrochen und dadurch die Option nicht auswählbar wird oder die Option entfernt wird.

2. Heißgetränkezubereitungsmaschine (1) nach Anspruch 1, wobei die Schnittstelle (3) dazu angepasst ist, vom Benutzer Eingaben zu empfangen und dem Benutzer eine Rückmeldung zu erteilen.

3. Heißgetränkezubereitungsapparat (1) nach Anspruch 2, **dadurch gekennzeichnet, dass** die Steuereinheit (5) zur Änderung der Schnittstelle (3) angepasst ist und somit dem Benutzer eine visuelle Rückmeldung zur Verfügung gestellt wird.

4. Heißgetränkezubereitungsmaschine (1) nach Anspruch 1, die zur Ermöglichung der Auswahl der gewünschten Tassengröße durch den Benutzer mindestens einen Tassenwähler (4) mit mindestens zwei Positionen zum Auswählen von mindestens zwei unterschiedlichen Tassengrößen umfasst, und mindestens eine Speichereinheit, **gekennzeichnet durch** die Steuereinheit (5) umfasst, die dazu angepasst ist, unter Verwendung der vom Sensor (2) zur Verfügung gestellten Werte und des der ausgewählten Tassengröße entsprechenden Wertes in der Speichereinheit die Anzahl der daraus herstellbaren Tassen zu berechnen und in der mindestens die Daten über die erforderliche Menge an Materialien für jede Tassengröße gespeichert sind.

## Revendications

1. Machine de préparation de boissons chaudes (1), où les sélections concernant les types de boissons qui ne pourraient pas être préparées selon les niveaux de composants à l'intérieur d'un récipient (H) sont empêchées d'être sélectionnées par l'utilisateur, comprend,
- Au moins un capteur (2) pour détecter le niveau de matière à l'intérieur du récipient (H),
- Au moins une interface (3) permettant à l'utilisateur de sélectionner une, plusieurs ou toutes les options pour au moins le type, le type de préparation et le numéro de la boisson à préparer, et au moins une unité de commande **caractérisée par**,
- Au moins une unité de commande (5) étant adaptée pour calculer la matière restante à l'intérieur du conteneur (H) en fonction des données fournies par le capteur (2), et d'empêcher que les sélections concernant les boissons qui ne peuvent pas être préparées selon le niveau de matière calculé soient sélectionnées sur l'interface (3) en coupant l'alimentation desdits moyens d'entrée, en rendant ladite option non sélectionnable ou en supprimant ladite option.

2. Machine de préparation de boissons chaudes (1) selon la revendication 1, dans laquelle l'interface (3) est adaptée pour recevoir une entrée de l'utilisateur, et pour donner un retour d'information à l'utilisateur.

3. Appareil de préparation de boissons chaudes (1) selon la revendication 2, **caractérisé en ce que** l'unité de commande (5) est adaptée pour changer l'interface (3) fournissant ainsi un retour visuel à l'utilisateur.

4. Machine de préparation de boissons chaudes (1) selon la revendication 1, en outre comprenant au moins un sélecteur de gobelets (4) ayant au moins deux positions pour sélectionner au moins deux tailles de gobelets différentes, permettant à l'utilisateur de sélectionner la taille du gobelet qu'il souhaite à utiliser, au moins une unité de mémoire, à l'intérieur de laquelle sont conservées au moins des données concernant la quantité de matériaux nécessaire pour chaque taille de gobelet et **caractérisée par** l'unité de commande (5) adaptée pour calculer le nombre de gobelets de boissons pouvant être préparées, à l'aide des données fournies par le capteur (2) et de la valeur dans l'unité de mémoire correspondant au gobelet sélectionné.
